# EUROPEAN PATENT SPECIFICATION

(11) **EP 0 670 020 B1**
(45) Date of publication and mention of the grant of the patent: **14.07.1999**
(21) Application number: 94924619.3
(22) Date of filing: 05.08.1994
(51) Int. Cl.: F16L 17/00

(54) **IMPROVED RESTRAINING ELEMENT FOR PRESSURE PIPE JOINTS**
RÜCKHALTEELEMENT FÜR DRUCKLEITUNGSVERBINDUNGEN
ELEMENT DE RETENUE POUR RACCORDS DE TUBES SOUS PRESSION

(30) Priority: 16.09.1993 US 121631
(43) Date of publication of application: 06.09.1995
(73) Proprietor: UNITED STATES PIPE AND FOUNDRY COMPANY, INC., Birmingham, Alabama 35222 (US)
(72) Inventor: JONES, Lawrence, S., Hueytown, AL 35023 (US); WEBER, Joe, Birmingham, AL 35212 (US)
(74) Representative: Baillie, Iain Cameron
(86) International application number: US9409028
(87) International publication number: WO9508072

(56) References cited:
- EP-A- 0 596 394
- WO-A-82/03440
- US-A- 3 963 298
- US-A- 4 229 026
- US-A- 5 067 751
- US-A- 5 094 467

## Description

The invention is in the field of joints for ductile iron pressure pipe and, more specifically, relates to a gasket for preventing separation of the joint formed by telescoping pipes.

In many applications where pipes are joined in telescoping relationship, the smooth or spigot end of one pipe is inserted into the socket end of the engaging pipe. The socket end has an opening large enough to receive the spigot end of the closed pipe. A gasket is inserted in the socket end of the enclosing pipe and prevents leakage of fluid from the joint by forming a seal between the two pipes.

In applications where the fluid such as water for fire mains or water distribution in municipalities is under high pressure, various means are used to prevent separation of the two pipes.

In some instances the pipes are fitted with flanges which are bolted together to prevent separation. This method is costly and time consuming because of the extra steps of inserting and tightening the bolts.

Another method to prevent separation of the pipes is to use blocks or eternal restraining devices. This method also is expensive and requires careful placement of the blocks.

A still further method is shown in U.S. Patents Nos. 3,963,298 and 4,229,026 in which a rubber gasket which serves as a fluid seal also has toothed metal segments spaced uniformly around its inner perimeter. The toothed metal segments bite into the outer surface of the spigot of the inserted pipe and prevent withdrawal of the inserted pipe. The metal segments pivot about a bead to allow the spigot end of one pipe to be inserted into the socket end of the other pipe while preventing withdrawal of the inserted pipe under high fluid pressure conditions. However, a drawback of this arrangement has been the fracture of breaking of the socketed portion of the inserted pipe when the teeth of the metal segments dig too deeply into the outer surface of the inserted pipe. This fracture has been noted when the metals segments rotate too far around the bead.

European Patent No. 0596394 granted 15/1/97 describes an improved gasket which we previously developed having metal segments with teeth to engage the spigot of a pipe, each of said metal segments also having a single, acutely pointed tooth on the side of said segment opposite said teeth engageable with a groove in one of the telescoped pipes to prevent excessive rotation of said metal segments.

In the manufacturing of ductile iron pipe, the outside diameter of the spigot end of the enclosed pipe will vary somewhat in size despite efforts to make a standard uniform pipe. Likewise, the bell of the enclosing pipe will vary somewhat in size also.

It is at the extreme circumstances where a spigot end of minimum diameter is inserted into the bell of a pipe with maximum diameter or where a spigot end of maximum diameter is inserted into the bell end of a pipe with minimum diameter that some difficulty has been encountered with this improved gasket having a metal segment with three teeth. It has been found that with only three teeth two positions of the metal segment will occur when the pipes tend to disengage under high pressure.

The invention therefore aims to provide a further improved toothed metal segment for preventing disengagement of pipes while also preventing breakage of the spigot end of one of the pipes despite the use of higher pressures in the pipe.

The present invention therefore provides a gasket for sealing and preventing separation of telescoped pipes with an inner pipe having a spigot end and an outer pipe having a groove for receiving a portion of the gasket, said groove being limited by a front wall and a bead, the gasket comprising a compressible body with a heel portion and a sealing portion and metal segments embedded circumferentially spaced in an exposed face of said body and each of said metal segments having a row of at least four teeth extending radially inwardly from a first face of said metal segment and at least some of said metal segments having a single tooth extending radially outwardly of the side of said metal segments opposite said first face, and a groove opposite to the teeth which in use cooperates with the bead of the outer pipe, characterized in that said row of teeth lying in an arc curved in the same direction as the groove.

Other features and advantages of the present invention will become apparent to those skilled in the art from the following description of the preferred embodiment of the invention taken in conjunction with the accompanying drawing in which like numerals indicate like elements and in which:
Fig. 1 is a fragmented cross-sectional view of a socket or pipe bell of one pipe using the earlier improved gasket noted above and of a spigot or plain end of another pipe entering the pipe bell, and
Fig. 2 is a fragmented cross-sectional view of a socket or pipe bell of one pipe using the earlier improved gasket and of a spigot or plain end of another pipe fully inserted to the socket end of the first pipe.
Fig. 3 is a top view of the earlier improved gasket showing the placement of metal segments around its periphery.
Fig. 4 is a cross-sectional view of a metal segment of the gasket of the invention.
Fig. 5 is a cross-sectional view of gasket 6 showing the metal segment 34a of Figure 4.
Fig. 6 is a cross-sectional view of a joint using one of the metal segments of the gasket of the invention.
Fig. 7 is a cross-sectional view of a joint using one of the metal segments of the gasket of the invention, under different conditions from those shown in Fig. 6, and
Fig. 8 is a cross-sectional view of a joint using one of the metal segments of the gasket of the invention under different conditions from those shown in Figs. 6 and 7.

Cast iron pressure pipe with a bell on one end and the other plain or beveled, have, for many years, been joined by utilizing a rubber or elastomeric gasket which is compressed between the inside walls of the bell and the outside wall of the plain or bevelled end of the next pipe in a series of telescoped pipes. The most successful of such systems provides an elongated retainer groove in the bell with a gasket sealing wall as well as throat and wall portions which guide and limit travel of the plain end as it passes through the bell opening and the rubber gasket. Such a pipe joint is described in U. S. Patent No. 2,953,398 issued September 20, 1960 and U. S. Patent No. 4,108,481 issued August 22, 1982. Gaskets of this type generally have three essential features, a sealing bulb portion, a heel portion and an inner conical wall.

Since both the pipe bell and plain end may be produced without machining, relatively large variations in as-cast diameters are encountered. The gasket sealing bulb, in turn, is subjected to a wide range of compressions from approximately 2% to 45% of its original thickness. To aid in entry of the plain end into the gasketed bell over the large range of diameters encountered, the inner wall of the gasket is generally made in a conical form which tapers from the mating throat diameter of the bell to the inner sealing bulb diameter of the gasket. To further aid in the assembly, the gasket bulb has a relatively soft Shore A durometer hardness between about 40 and 60.

The retainer heel portion of the gasket is typically produced from a higher hardness compound than the sealing bulb to aid in retention of the gasket during joint assembly and to prevent blowout of the softer bulb portion when the assembled joint is subjected to high internal pressures. The retainer heel portion of a typical gasket has a Shore A durometer hardness between about 75 to 90. The retainer heel portion is generally designed to fit into a retaining groove of the bell section of the enclosing pipe. Known gaskets exhibiting these features are asymmetric in cross-sectional profile.

Gaskets of similar asymmetric cross-sectional profiles have also been produced from single hardness rubber compounds. If the entire gasket is of the harder compound, extremely high assembly forces are required. If the entire gasket is of the softer compound, the gasket is subject to be dislodged during assembly and, in addition, only relatively low internal pressures can be held. Single hardness gaskets are, therefore, normally produced of an intermediate Shore A hardness range from between about 60 and 75. In general, with single hardness gaskets of this type, one or more of the attributes of the dual hardness gasket is diminished.

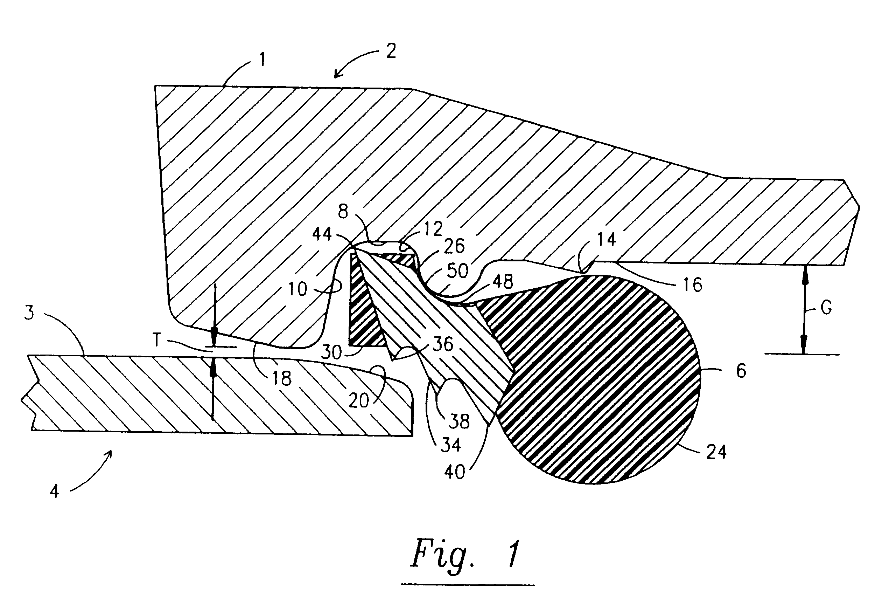

Figure 1 shows a joint which is to be formed between a pipe bell end 1 of one pipe 2 and a plain or spigot end 3 of a second pipe 4. Second pipe 4 is to be pushed into the bell end 1 of the enclosing pipe 2. The gasket 6 is shown in place in pipe bell 1 of pipe 2.

The inner surface of pipe bell 1 has a retainer groove 8 bounded by a front wall 10 and retainer wall 12, and a compression rib 14 which extends radially inwardly from a sealing wall 16. In addition, the bell has a throat portion 18 which extends radially inwardly and joins the front wall 10. As the joint is assembled the throat 18 guides the plain end 3 until the bevelled end 20 contacts the conical inner face (not shown) of the gasket 6. The wedging action between the bevelled end 20 and the conical face compresses the sealing bulb portion 24 of the gasket between the plain end 3 and the compression rib 14 and the sealing wall 16. The retainer wall 12 of the bell inner surface engages the retainer shoulder 26 of the gasket to prevent the gasket from dislodging during assembly of the joint.

In tight joint conditions, the gasket space G between the sealing wall 16 and plain end 3 is relatively small and the gasket compression and joint assembly forces are relatively high. A sealing bulb 24 of gasket 6 of a relatively soft durometer elastomer is used to reduce the force required for tight joint assemblies. A harder durometer elastomer is used for the retainer heel portion 30 to prevent the gasket from dislodging during tight joint assemblies.

While the joint of the present invention is described in terms of a sealing gasket of dual durometer, the gasket may also be of single durometer.

In loose joint conditions the throat gap T between the throat 18 and the plain end 3 is relatively large. When the pipe joint is pressurized, the gasket is forced toward the front wall 10 and fills the retainer groove 8 of the pipe bell. The softer sealing bulb 24 of the gasket will attempt to extrude through the throat gap T. The harder retainer heel portion 30 of the gasket, resists the extrusion of the softer bulb portion 24 of the gasket through the throat gap T.

While the invention has been described in the environment of a pipe joint in which the bell end of the enclosing pipe has a compression rib 14, the gasket will also perform its sealing function with a bell configuration such as that shown in U. S. Patent No. 2,953,398 which does not have a compression rib.

Inserted into gasket 6 is a series of metal segments 34 formed in accordance with our earlier improved gasket. The segments are spaced apart equally in a circumferential direction around the periphery of gasket 6. Metal segments 34 are firmly vulcanized into gasket 6. The number of metal segments inserted into a gasket will vary depending upon the anticipated fluid pressure at the joint and the size of the pipes involved. For example, for pipes where the spigot end is 63 cm (24.80") in outer diameter and the anticipated fluid pressure is 49.2 kg/cm² (700 psi), 42 metal segments are placed at a uniform distance apart around the periphery of the gasket.

The metal segment 34 has three teeth 36, 38 and 40 extending beyond the heel portion 30 of gasket 6 toward the interior of the gasket. Teeth 36, 38 and 40 are designed to bite into the outer surface of spigot 3 when pipe 4 is inserted into the bell end 1 of pipe 2. Metal segment 34 is similar in design to the metal segment shown in U. S. Patent No. 3,963,298, except that metal segment 34 has three teeth exposed to cut into the outer surface of spigot 3 and a fourth tooth 44, which extends outwardly through the opposite side of gasket. Tooth 44 extends outwardly at the opposite or outer face of gasket 6.

The back or outer face of gasket 6 has a groove 48 lying between heel portion 30 and sealing portion 24 of gasket 6. Groove 48 receives a bead 50 of bell 1. Gasket 6 can pivot partially around bead 50 when spigot 3 is moving into or out of bell 1.

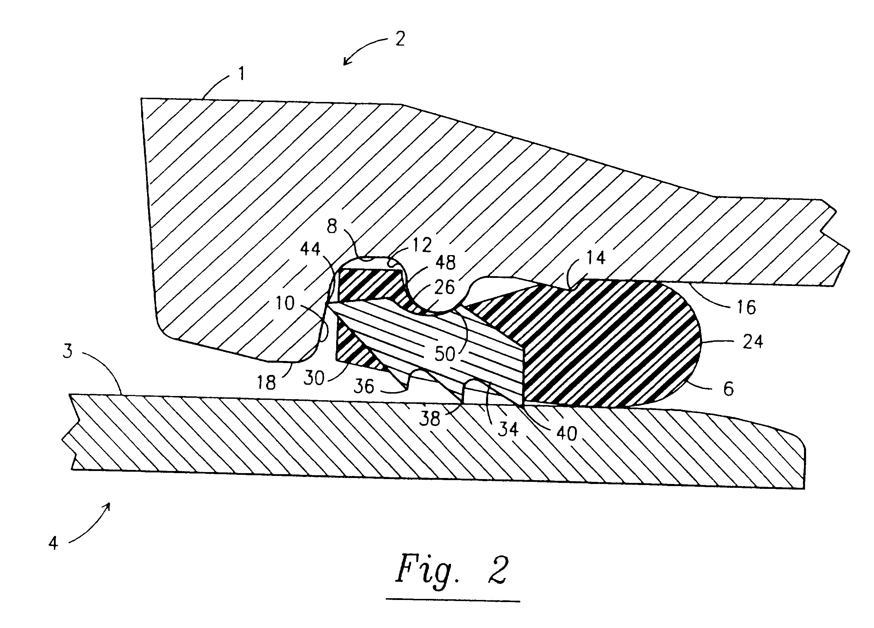

Referring now to Fig. 2, there is shown a joint completed by the full insertion of spigot 3 of pipe 4 into the bell 1 of pipe 2. As spigot 3 of pipe 4 moves into bell 1 of pipe 2 (to the right as shown in Fig. 2), the spigot 3 rides against tooth 40 of metal segment 34 and compresses sealing bulb 24 of gasket 6 to form a fluid-tight seal between the inner surface of pipe 2 and the outer surface of pipe 4. Spigot 3 also pushes against the elastomeric portion of gasket 6 between the metal segments. As spigot 3 pushes against tooth 40, metal segment 34 pivots counter-clockwise around bead 50. At this time, tooth 44, which protrudes outside of the outside portion of gasket 6, rides along the inner face of front wall 10.

The joint is now sealed and fluid under pressure can be carried by the pipe system.

As the fluid pressure rises, there is a tendency for pipe 4 to move to the left and this can cause the joint to be broken. However, as pipe 4 moves to the left, tooth 40 of gasket 6 digs into the outer surface of spigot 3 as metal segment 34 tends to move to the left and to pivot clockwise around bead 50. If the metal segment 34 rotates too far around bead 50, tooth 40 will bite into the periphery of spigot 3 with enough force to break pipe 4.

To prevent the excessive rotation of metal segment 34, tooth 44, which protrudes through the rear or outer face of gasket 6, bites into the inner face of front wall 10. In preventing excessive rotation of metal segment 34, the breakage of pipe 4 is avoided.

Because back tooth 44 bites into the inner face of front wall 10, a stronger joint capable of resisting higher internal pressures is provided since the separating force is transferred from a radial to an axial force acting along the longitudinal axis of the pipe.

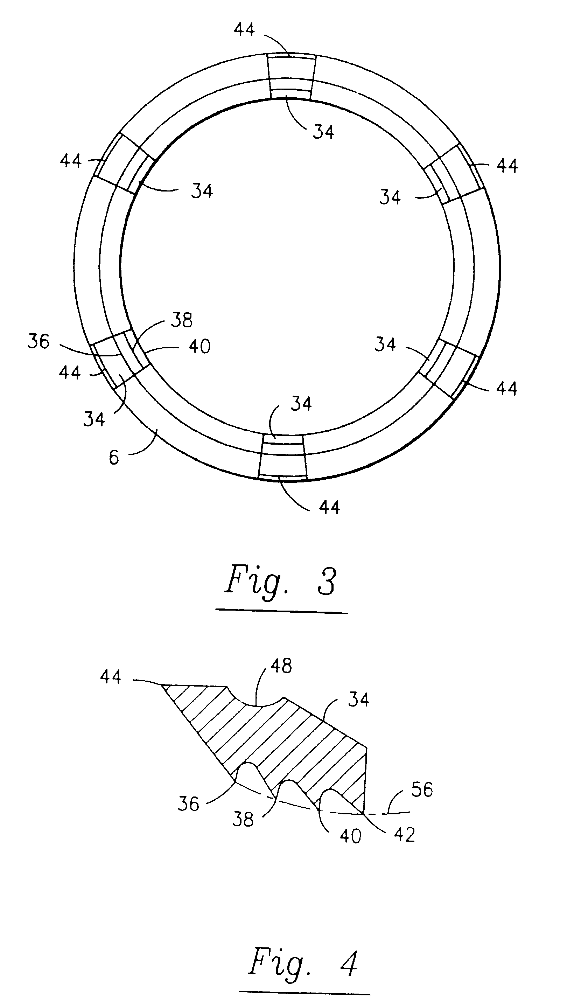

Fig. 3 shows a gasket 6 with metal segments 34 spaced at equal distances from each other along the periphery of the gasket. It should be recognized that all of the metal segments 34 spaced around the periphery of gasket 6 operate in the same manner as that described with respect to the metal segment described in the preceding description.

An embodiment of the present invention will now be described with regard to Figs. 4, 5, 6, 7, and 8.

Fig. 4 shows a metal segment 34a similar to the metal segment 34 illustrated in Fig. 1 except that metal segment 34a has a fourth tooth 42. All of the teeth, 36, 38, 40, and 42, lie in a common arc 56. In this invention the arc is a segment of a circle with a radius of 2.38 cm (.939"). However, this specific dimension should be not considered as a limiting factor in the invention.

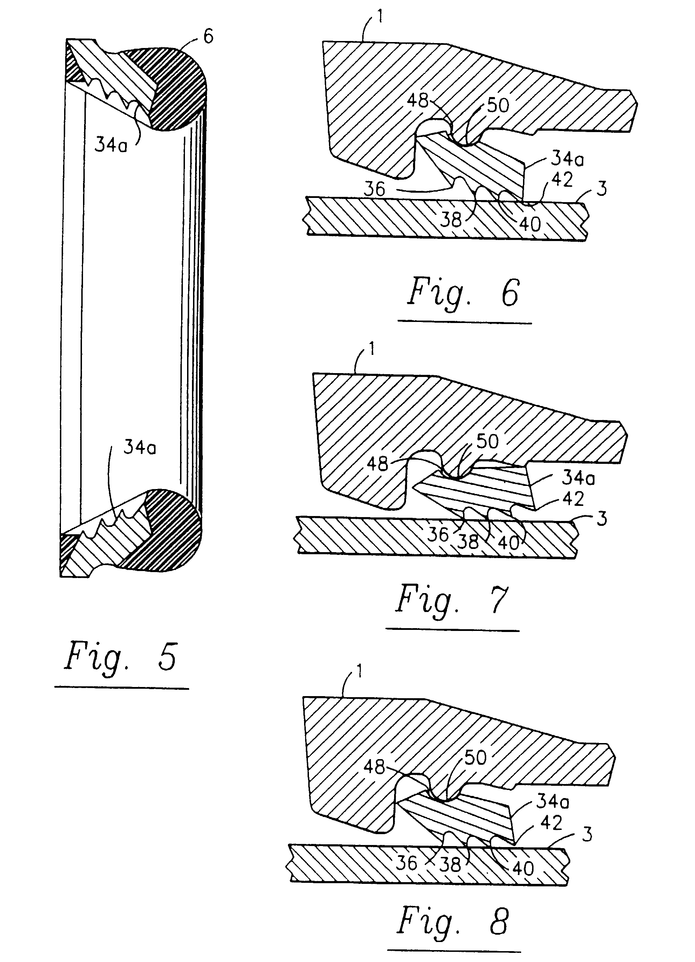

Figure 5 is a cross-sectional view of gasket 6 with metal segments 34a shown in Figure 4 embedded in the rubber ring of gasket 6.

An example of the use of new segment 34a is shown in Fig. 6 where the tolerance between the pipes is at the extreme where the spigot of the enclosed pipe 3 has a minimum diameter and the bell of the enclosing pipe 1 has a maximum diameter. In this illustration, as the pipes tend to disengage, metal segment 34a rotates around bead 50 and teeth 40 and 42 of metal segment 34a engage the spigot end of pipe 3.

As shown in Fig. 7, where the tolerance between the pipes is at the extreme where the spigot of the enclosed pipe 3 has a maximum diameter and the bell of the enclosing pipe 1 has a minimum diameter, teeth 36 and 38 of metal segment 34a will engage the spigot end of pipe 3 to prevent disengagement of the pipes.

As shown in Fig. 8 which is the more general case, the tolerances between the spigot end of pipe 3 and the bell of pipe 1 is more like to be an average of the two extreme cases, the middle teeth 38 and 40 of metal segment 34a will engage the spigot end of pipe 3 when the pipes tend to disengage under high fluid pressure.

Thus, the invention is more universal in scope than other gaskets with metal segments.

In summary, the invention, by using metal segments having a tooth on its rear surface and four teeth in an arc on its opposite face has greater flexibility in preventing rupture of the spigot of an enclosed pipe.

While the present invention has been described with respect to specific embodiments thereof, it should be understood that the invention is not limited thereto as many modifications thereof may be made. It is, therefore, contemplated to cover by the present application any and all such modifications as fall within the scope of the appended claims.

## Claims

1. A gasket (6) for sealing and preventing separation of telescoped pipes (2, 4) with an inner pipe (4) having a spigot end (3) and an outer pipe (2) having a groove (8) for receiving a portion of the gasket (6), said groove (8) being limited by a front wall (10) and a bead (50), the gasket (6) comprising a compressible body with a heel portion (30) and a sealing portion (24) and metal segments (34) embedded circumferentially spaced in an exposed face of said body and each of said metal segments (34) having a row of at least four teeth (36-42) extending radially inwardly from a first face of said metal segment (34) and at least some of said metal segments having a single tooth (44) extending radially outwardly of the side of said metal segments opposite said first face, and a groove (48) opposite to the teeth (36-42) which in use cooperates with the bead (50) of the outer pipe (2), characterized in that said row of teeth (36-41) is lying in an arc curved in the same direction as the groove (48).

2. A gasket (6) according to claim 1,
characterized in that said single tooth (44) extends radially away from the row of teeth (36-42) and axially away from the sealing portion (24) of the compressible body, said single tooth (44) being acutely pointed so as to bite into the inner face of said front wall (1) of said groove (8) when the gasket (6) is mounted in the outer pipe (2) and the pipes (2, 4) are telescoped whereby excessive rotation of the metal segment (34a) is prevented in order to avoid fractures in the spigot end (3) of the inner pipe (4).

3. A gasket (6) according to claim 1, characterized in that said gasket (6) has a heel portion (30) having a preselected Shore hardness and said sealing portion (24) has a Shore hardness less than said preselected Shore hardness of said heel portion (30).

4. A gasket (6) according to claim 1, characterized in that said heel portion and said sealing portion are of the same Shore hardness.

## Patentansprüche

1. Dichtung (6) zum Versiegeln von teleskopartig ineinandergeschobenen Rohren (2, 4), und um zu verhindern, daß diese getrennt werden, wobei ein inneres Rohr (4) ein Spitzende (3) aufweist, und ein äußeres Rohr (2) eine Nut (8) aufweist, die einen Abschnitt der Dichtung (6) aufnimmt, wobei die Nut (8) durch eine vordere Wand (10) und eine Wulst (50) begrenzt ist, wobei die Dichtung (6) folgendes umfaßt: einen komprimierbaren Körper mit einem Fersenabschnitt (30) und einem Dichtungsabschnitt (24) sowie Metallsegmenten (34), die am Umfang im Abstand voneinander in einer freiliegenden Fläche des Körpers eingebettet sind, wobei jedes der Metallsegmente (34) eine Reihe von mindestens vier Zähnen (36-42) aufweist, die von einer ersten Fläche des Metallsegments (34) radial nach innen ragen, und wenigstens einige der Metallsegmente einen einzelnen Zahn (44) aufweisen, der von der der ersten Seite gegenüberliegenden Seite der Metallsegmente radial nach außen ragt, und eine Nut (48) gegenüber den Zähnen (36-42), die im Gebrauch mit der Wulst (50) des äußeren Rohres (2) zusammenwirkt, dadurch gekennzeichnet, daß die Reihe von Zähnen (36-41) in einem Bogen liegt, der in der gleichen Richtung gekrümmt ist wie die Nut (48).

2. Dichtung (6) nach Anspruch 1, dadurch gekennzeichnet, daß der einzelne Zahn (44) sich von der Reihe von Zähnen (36-42) radial wegerstreckt und von dem Dichtungsabschnitt (24) des komprimierbaren Körpers axial wegerstreckt, wobei der einzelne Zahn (44) spitzwinkling zugespitzt ist, so daß er in die Innenseite der vorderen Wand (1) der Nut (8) eingreift, wenn die Dichtung (6) in dem äußeren Rohr (2) befestigt ist und die Rohre (2, 4) teleskopartig ineinandergeschoben sind, so daß eine übermäßige Drehung des Metallsegments (34a) verhindert wird, um Brüche im Spitzende (3) des inneren Rohres (4) zu vermeiden.

3. Dichtung (6) nach Anspruch 1, dadurch gekennzeichnet, daß die Dichtung (6) einen Fersenabschnitt (30) mit einer vorgewählten Shore-Härte aufweist, und der Dichtungsabschnitt (24) eine Shore-Härte besitzt, die kleiner ist als die vorgewählte Shore-Härte des Fersenabschnitts (30).

4. Dichtung (6) nach Anspruch 1, dadurch gekennzeichnet, daß der Fersenabschnitt und der Dichtungsabschnitt die gleiche Shore-Härte besitzen.

## Revendications

1. Garniture (6) d'étanchéité, destinée à empêcher la séparation de tubes (2, 4) raccordés télescopiquement et comprenant un tube interne (4) ayant une extrémité (3) à bout mâle et un tube externe (2) ayant une gorge (8) destinée à loger une partie de la garniture (6), la gorge (8) étant délimitée par une paroi avant (10) et un cordon (50), la garniture (6) comprenant un corps compressible ayant une partie de talon (30) et une partie d'étanchéité (24) et des segments métalliques (34) enrobés dans une face exposée du corps en étant espacés circonférentiellement, chacun des segments métalliques (34) ayant une rangée d'au moins quatre dents (36-42) qui s'étendent radialement vers l'intérieur depuis une première face du segment métallique (34), certains au moins des segments métalliques ayant une seule dent (44) qui s'étend radialement vers l'extérieur du côté des segments métalliques opposé à la première face, et une gorge (48) opposée aux dents (36-42) et qui, pendant l'utilisation, coopère avec le cordon (50) du tube externe (2), caractérisée en ce que la rangée de dents (36, 41) se trouve sur un arc courbé dans le même sens que la gorge (48).

2. Garniture (6) selon la revendication 1, caractérisée en ce que la dent unique (44) s'étend radialement du côté opposé à la rangée de dents (36-42) et s'étend axialement du côté opposé à la partie d'étanchéité (24) du corps compressible, la dent unique (44) ayant une pointe acérée afin qu'elle vienne mordre la face interne de la paroi avant (1) de la gorge (8) lorsque la garniture (6) est montée dans le tube externe (2), et les tubes (2, 4) sont introduits télescopiquement, si bien qu'une rotation excessive du segment métallique (34a) est empêchée et évite des fractures de l'extrémité (3) de bout mâle du tube interne (4).

3. Garniture (6) selon la revendication 1, caractérisée en ce que la garniture (6) possède une partie de talon (30) ayant une dureté Shore prédéterminée, et la partie d'étanchéité (24) a une dureté Shore inférieure à la dureté Shore prédéterminée de la partie de talon (30).

4. Garniture (6) selon la revendication 1, caractérisée en ce que la partie de talon et la partie d'étanchéité ont la même dureté Shore.
